(19) Europäisches Patentamt
European Patent Office
Office européen des brevets

(11) Publication number: 0 071 440
B1

(12) EUROPEAN PATENT SPECIFICATION

(45) Date of publication of patent specification: 02.05.85

(51) Int. Cl.⁴: C 07 F 7/10

(21) Application number: 82303920.1

(22) Date of filing: 23.07.82

(54) **Process for preparing trialkylsilyldiazomethanes.**

(30) Priority: 23.07.81 JP 115510/81

(43) Date of publication of application: 09.02.83 Bulletin 83/06

(45) Publication of the grant of the patent: 02.05.85 Bulletin 85/18

(84) Designated Contracting States: CH DE FR GB LI

(56) References cited:

Chemical Abstracts vol. 76, no. 9, 28 February 1972, Columbus, Ohio USA Z. YOSHIDA et al. "Reaction of 1-pyrrolylmagnesium bromide with p-toluenesulfonyl azide" page 363, column 1, abstract no. 46025j

Chemical Abstracts vol. 73, no. 15, 12 October 1970 Columbus, Ohio USA S. ITO et al. "Pyrolysis of the Grignard reaction products of benzenesulfonyl azide" page 323, column 2, abstract no. 76719u

(73) Proprietor: Chisso Corporation
6-32, Nakanoshima 3-chome Kita-ku
Osaka-shi Osaka-fu (JP)

(72) Inventor: Shioiri, Takayuki
18-12, Minamigaoka 1-chome Nisshincho
Aichigun Aichiken (JP)
Inventor: Aoyama, Toyohiko
108, Ikazuchi Narumicho Midoriku
Nagoyashi Aichiken (JP)
Inventor: Mori, Shigehiro
2-12, Kawazumicho Mizuhoku
Nagoyashi Aichiken (JP)

(74) Representative: Ruffles, Graham Keith et al
MARKS & CLERK 57-60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 071 440 B1

## Description

This invention relates to a process for the synthesis of trialkylsilyldiazomethanes.

Trialkylsilyldiazomethanes are useful reagents which are employed in the improved synthetic process of Arndt-Eistert, as proposed by the same inventors of this invention (Japanese patent application Nos. Sho 55—87564 and Sho 55—140998), and also in a homologation reaction process for introducing a methylene group in to a carbonyl compound (Japanese patent application No. Sho 55—87565), a process for the preparation of nitro-β-trialkylsilylstyrene oxide (Japanese patent application No. Sho 56—87566) and a novel synthetic route for the preparation of carboxylic esters (Japanese patent application No. Sho 56—17725), as well as others.

The following procedures for synthesis of trialkylsilyldiazomethanes are already known, with trimethylsilyldiazomethane being adopted as an example.

(1)

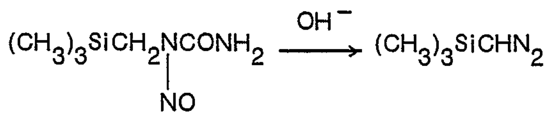


Journal of Organometallic Chemistry, *44*, 279 (1972)

(2)

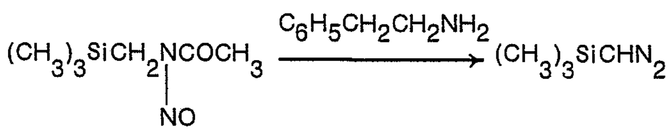


Synthesis, *1976*, 271

(3)

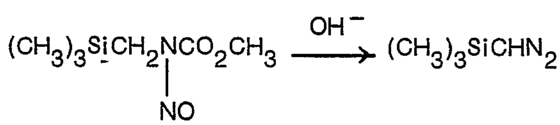


Zhurnal Obshchei Khimii, *39*, 2785 (1969)

(4)

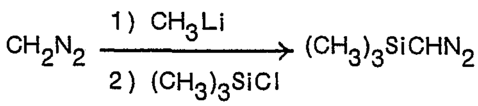


Chemical Communication, *1967*, 836; Journal of Chemical Society, (A) 2954 (1970)

(5)

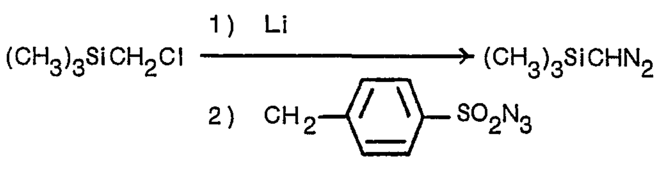


Synthesis and Reactivity in Inorganic and Metal-Organic Chemistry, *9*, 297 (1979)

The yields of these procedures are, however, poor in most cases, such as (1) 56%, (2) 30%, (3) 25%, (4) 5% and (5) 38%. Thus there are many practical problems.

An object of the present invention is to provide a process for preparing trialkylsilyldiazomethane with a high yield.

In accordance with the process of this invention, a trialkylsilyldiazomethane (IV) is prepared by a process in which a halomethyltrialkylsilane (I) represented by the general formula

$$R^1R^2R^3SiCH_2X$$

wherein $R^1$, $R^2$ and $R^3$ denote an alkyl group of 1 to 4 carbon atoms, and X denotes a halogen atom, is reacted with activated metallic magnesium in a solvent to give a Grignard reagent (II) which is then reacted with diphenylphosphoric acid azide (III).

The above-mentioned reactions are illustrated by the following equation:

$$\underset{(I)}{R^1R^2R^3SiCH_2X} \xrightarrow{Mg} \underset{(II)}{R^1R^2R^3SiCH_2MgX}$$

$$\xrightarrow[2)\ H_2O]{1)\ (C_6H_5O)_2P(O)N_3 \quad (III)}$$

$$\underset{(IV)}{R^1R^2R^3SiCHN_2} + (C_6H_5O)_2P(O)NH_2$$

The reaction of the halomethyltrialkylsilane (I) with metallic magnesium can be carried out by introducing metallic magnesium into a solvent, activating it with 1,2-dibromoethane or iodine, etc, and thereafter adding a halomethyltrialkylsilane (I) with reflux of the solvent.

The amount of metallic magnesium used in the reaction is in the range of from 1 to 2 mols and preferably is from 1 to 1.5 mols per mol of halomethyltrialkylsilane (I). If the amount of the metallic magnesium is too little, unreacted silane (I) remains and is liable to exert a bad influence upon the next reaction, while too much metallic magnesium does not exert a desirable influence upon the current reaction and only results in a loss of magnesium.

The reaction temperature is from 0°C to 150°C and preferably is from 0°C to 70°C. Too low a temperature is undesirable due to the low reaction rate, while too high a temperature is liable to bring about bumping and is therefore usually undesirable. Suitably the reaction time may be from 30 minutes to 48 hours preferably from 1 to 24 hours.

The reaction of the Grignard reagent obtained by the abovementioned reaction with diphenylphosphoric acid azide (3) is carried out in the solvent at a temperature between −78°C and 40°C, suitably for a reaction time between 10 minutes and 48 hours, preferably between 30 minutes and 48 hours. Reaction temperatures lower than −78°C are difficult to attain in practice, while those higher than 40°C are liable to bring about decomposition of the diphenylphosphoric acid azide (3). Too short a reaction time is insufficient for the progress of reaction, while too long a time is uneconomic. The amount of diphenylphosphoric acid azide (3) used is from 0.8 to 2 mols preferably from 0.9 to 1.2 mole per mol of the Grignard reagent. Too small an amount or too large an amount of the azide (3) results in an immoderate loss of the Grignard reagent or azide (3) and is therefore undesirable.

As the solvent used in the reaction according to this invention, ether solvents such as diethyl ether, di-n-butyl ether and tetrahydrofuran, etc, are best employed. After the end of the reaction, the reaction solution is worked up with ice water or the like procedure to obtain the trialkylsilyldiazomethane generally as a solution. The solution can be employed as such for various reactions.

According to the invention the following halomethyltrialkylsilanes (I) may be used: chloromethyltrimethylsilane, chloromethyltriethylsilane, chloromethyltripropylsilane, chloromethyldimethylethylsilane, and chloromethyldimethyl-t-butylsilane. The corresponding halogen compounds containing an halogen atom other than chlorine may also be used.

A characteristic of this invention is that the trialkylsilyldiazomethane can be obtained with a relatively high yield as compared with the hitherto known processes.

This invention is illustrated by the following examples.

Example 1

To a mixture of metallic magnesium (0.875 g, 36 mmol) and diethyl ether (2 ml), a drop of 1,2-dibromethane was added with stirring to activate the magnesium, and thereafter further diethyl ether (10 ml) was added. A solution of chloromethyltrimethylsilane (3.678 g, 30 mmol) in diethyl ether (8 ml) was then added dropwise at such a rate that the solvent refluxed. After the dropwise addition, the reaction solution was stirred for 20 hours at room temperature to give a Grignard reagent.

To a solution of diphenylphosphoric acid azide (7.425 g, 27 mmol) in diethyl ether (40 ml), the Grignard reagent was added dropwise at 0°C. After the dropwise addition, the reaction solution was stirred at 0°C for 2 hours and at room temperature for 3 hours. The reaction solution was added to ice water to cause precipitation. The precipitate was filtered with suction and washed with diethyl ether, and then the filtrate diethyl ether layer and diethyl ether washings were combined, washed with cold water and dried (anhydrous sodium sulphate).

The diethyl ether solution was concentrated at atmospheric pressure (bath temperature being below 45°C) using a Widmer's fractional distillation device. The remaining solution was distilled under a reduced pressure (15 mmHg) at a bath temperature of 0°C to 30°C and collected by cooling with dry ice-acetone to obtain a yellow liquid, which was further concentrated at atmospheric pressure to obtain 4.098 g of a yellow solution of trimethylsilyldiazomethane in diethyl ether.

According to the NMR spectrum, the yield of trimethylsilyldiazomethane was 78.6% and its concentration was 59.1 weight % (g/g).

Example 2

Example 1 was followed with the same amounts of reagents, reaction conditions and working-up process, except that the synthesis of the Grignard reagent was carried out at room temperature for 3 hours and the reaction of diphenylphosphoric acid azide with the Grignard reagent was carried out at 0°C for 2 hours.

About 5 ml of solution of trimethylsilyldiazomethane in diethyl ether was obtained. 10 ml of hexane was added to this solution and diethyl ether was completely distilled off under normal pressure using Widmer's distillation device to obtain 11.27 ml of a yellow solution of trimethylsilyldiazomethane in hexane.

According to the NMR spectrum, the yield of trimethylsilyldiazomethane was 75.3% and its concentration was 1.805 mol/l.

Example 3

To a mixture of metallic magnesium (0.875 g, 36 mmol) and di-n-butyl ether (2 ml), a drop of 1,2-dibromoethane was added with stirring to activate the magnesium, and thereafter further di-n-butyl ether (10 ml) was added. A solution of chloromethyltrimethylsilane (3.678 g, 30 mmol) in di-n-butyl ether (8 ml) was then added dropwise in such a manner that the reaction temperature was 30 to 40°C. After the dropwise addition, the mixture was stirred for 3 hours at 30°C to prepare a Grignard reagent.

To a solution of diphenylphosphoric acid azide (7.425 g, 27 mmol) in di-n-butyl ether (40 ml), the Grignard reagent was added dropwise at 0°C. After the dropwise addition, the reaction solution was added to ice water to give a precipitate which was then filtered with suction and washed with d-n-butyl ether. The filtrate di-n-butyl ether layer and di-n-butyl ether washings were combined, washed with cold water and dried (anhydrous sodium sulphate). Thereafter, the solution was distilled under a reduced pressure (bath temperature of 45 to 48°C, 15 mmHg) until the yellow colour of the distillate had disappeared. The distillate was further distilled under reduced pressure (bath temperature of 87°C to 94°C, 90 to 103 mmHg) using Widmer's fractional distillation device to obtain 1.857 g of a yellow solution of trimethylsilyldiazomethane in di-n-butylether.

According to the NMR spectrum, the yield of trimethylsilyldiazomethane was 55.3% and its concentration was 91.8 weight % (g/g).

Example 4

Example 3 was followed with the same amounts of reagents, reaction conditions and working-up process, except that the synthesis of the Grignard reagent was carried out at 30°C for 2 hours and at room temperature for 17 hours and the reaction of diphenylphosphoric acid azide with the Grignard reagent was carried out at 0°C for 2 hours and at room temperature for 3 hours. 1.848 g of solution of trimethylsilyldiazomethane in di-n-butyl ether was obtained.

According to NMR spectrum, the yield of trimethylsilyldiazomethane was 57.6% and its concentration was 96.1 weight % (g/g).

Example 5

To a mixture of metallic magnesium (292 mg, 12 mmol) and tetrahydrofuran (1 ml), a drop of 1,2-dibromethane was added with stirring to activate the magnesium, and thereafer further tetrahydrofuran (3 ml) was added. A solution of chloromethyltrimethylsilane (1.24 g, 10 mmol) in tetrahydrofuran (3 ml) was then added dropwise in such a manner that the reaction temperature was 30°C to 35°C. The mixture was stirred thereafter for 3 hours at room temperature to give a Grignard reagent.

To a solution of diphenylphosphoric acid azide (2.48 g, 9 mmol) in tetrahydrofuran (10 ml), the Grignard reagent was added dropwise at −5°C to 0°C. Then the mixture was stirred at 0°C for 2 hours. After 20 ml of ice water had been added to the reaction solution, it was distilled under reduced pressure (15 mmHg, bath temperature of 0°C to 30°C) to obtain a solution of trimethylsilyldiazomethane in tetrahydrofuran. Hexane (7 ml) was added, and the solution was washed with cold water until tetrahydrofuran was no longer present and thereafter dried (anhydrous sodium sulphate). 7.31 ml of a yellow solution of trimethylsilyldiazomethane in hexane was obtained.

According to the NMR spectrum, the yield of trimethylsilyldiazomethane was 57.6% and its concentration was 0.7 mol/l.

## Comparison Example 1

To a mixture of metallic magnesium (1.050 g, 43 mmol) and diethyl ether (5 ml), a drop of 1,2-dibromoethane was added with stirring to activate the magnesium, and thereafter further diethyl ether (15 ml) was added. A solution of chloromethyltrimethylsilane (4.414 g, 36 mmol) in diethyl ether (5 ml) was then added dropwise at such a rate that the solvent refluxed. After the dropwise addition, the reaction solution was stirred at 25°C to 30°C for 19 hours to prepare a Grignard reagent.

To a solution of tosylazide (para-toluenesulphonylazide) (6.383 g, 32.4 mmol) in diethyl ether (100 ml), the Grignard reagent was added dropwise at 0°C for 1 hour. After the dropwise addition, the reaction solution was stirred at 0°C for 6 hours and at room temperature for 34 hours. A precipitate which separated was filtered with suction and washed with diethyl ether, and then the filtrate and washings were combined, washed with cold water and with cold aqueous 1% caustic soda solution and dried (anhydrous sodium sulphate).

The diethyl ether solution was distilled off under atmospheric pressure (bath temperature being below 45°C) using Widmer's fractional distillation device, and the remaining solution was distilled under a reduced pressure (15 mmHg) at a bath temperature of 0°C to 30°C and collected with cooling by dry ice-acetone. The yellow liquid obtained was further subjected to an atmospheric concentration to obtain 1.51 g of a yellow solution of trimethylsilyldiazomethane in diethyl ether.

According to NMR spectrum, the yield of trimethylsilyldiazomethane was 16.7% and its concentration was 40.9 weight % (g/g).

The results are summarized in the Table below.

TABLE

| | Solvent | Azide | Synthesis of Grignard reagent temp time | Reaction with azide temp time | Yield (%) | Concentration *1 (%) |
|---|---|---|---|---|---|---|
| Example 1 | diethyl ether | III | room temp 20 hr | 0°C 2 hr room temp 3 hr | 78.6 | 59.1 |
| Example 2 | diethyl ether | III | room temp 3 hr | 0°C 2 hr | 75.3 | 1.805 mol / l *2 |
| Example 3 | di-n-butyl ether | III | 30°C 3 hr | 0°C 1.5 hr | 55.3 | 91.8 |
| Example 4 | di-n-butyl ether | III | 30°C 3 hr room temp 17 hr | 0°C 2 hr room temp 3 hr | 57.6 | 96.1 |
| Example 5 | tetrahydrofuran | III | room temp 3 hr | 0°C 2 hr | 57.6 | 0.71 mol / l *2 |
| Comparison Example 1 | diethyl ether | tosyl azide | room temp 19 hr | 0°C 6 hr room temp 34 hr | 16.7 | 40.9 |

*1 Concentrations are expressed in weight % (g / g) unless stated to be in mol / l

*2 in hexane

**Claims**

1. A process for preparing a trialkylsilyldiazomethane, characterized in that metallic magnesium is activated in a solvent, the activated magnesium is reacted at 0 to 150°C with a halomethyltrialkylsilane represented by the general formula

$$R^1R^2R^3SiCH_2X$$

wherein $R^1$, $R^2$ and $R^3$ denote an alkyl group of 1 to 4 carbon atoms, and X denotes a halogen atom, to give a Grignard reagent, the molar ratio of magnesium to halomethyltrialkylsilane being from 1:1 to 2:1, and the Grignard reagent is then reacted at −78 to +40°C with diphenylphosphoric acid azide, the molar ratio of diphenylphosphoric acid azide to Grignard reagent being from 0.8:1 to 2:1.

2. A process according to claim 1, wherein the reaction time for forming the Grignard reagent is from 30 minutes to 48 hours.

3. A process according to claim 1 or 2, wherein the reaction time for reacting the Grignard reagent with the azide is from 30 minutes to 48 hours.

**Patentansprüche**

1. Verfahren zur Herstellung eines Trialkylsilyldiazomethans, dadurch gekennzeichnet, daß metallisches Magnesium in einem Lösungsmittel aktiviert wird, daß man das aktivierte Magnesium bei 0 bis 150°C mit einem Halogenmethyltrialkylsilan mit folgender allgemeiner Strukturformel reagieren lässt:

$$R^1R^2R^3SiCH_2X$$

wobei $R^1$, $R^2$, und $R^3$ für eine Alkylgruppe mit 1 bis 4 Kohlenstoffatomen stehen und wobei X für ein Halogenatom steht, um ein Grignardsches Reagens zu erhalten, wobei das molare Verhältnis von Magnesium zu Halogenmethyltrialkylsilan von 1:1 bis 2:1 reicht, und daß man das Grignardsche Reagens dann bei −78 bis +40°C mit Diphenylphosphorsäureazid reagieren lässt, wobei das molare Verhältnis von Diphenylphosphorsäureazid zu Grignardschem Reagens von 0,8:1 bis 2:1 beträgt.

2. Verfahren gemäß Anspruch 1, bei dem die Reaktionszeit zur Herstellung des Grignardschen Reagens von 30 Minuten bis 48 Stunden beträgt.

3. Verfahren gemäß Anspruch 1 oder 2, bei dem die Reaktionszeit, für die man das Grignardsche Reagens mit dem Azid reagieren lässt, von 30 Minuten bis 48 Stunden beträgt.

**Revendications**

1. Procédé de préparation de trialcoylsilyldiazométhanes, caractérisé en ce que du magnésium métal est activé dans un solvant, que ce magnésium acitvé réagit à une température de 0 à 150°C avec un halométhyltrialcoylsilane représenté par la formule générale:

$$R^1R^2R^3SiCH_2X$$

dans laquelle $R^1$, $R^2$, et $R^3$ signifient un groupe alcoyle avec 1 à 4 atomes de carbone et X signifie un atome d'halogène, pour donner un réactif de Grignard, le rapport molaire du magnésium à l'halométhyltrialcoylsilane étant compris entre 1:1 et 2:1, et le réactif de Grignard réagit ensuite à une température de −78 à +40°C avec l'azide de l'acide diphénylphosphorique, le rapport molaire de l'azide de l'acide diphénylphosphorique au réactif de Grignard étant de 0,8:1 à 2:1.

2. Procédé selon la revendication 1, caractérisé en ce que la durée de réaction pour former le réactif de Grignard est de 30 minutes à 48 heures.

3. Procédé selon les revendication 1 ou 2, caractérisé en ce que la durée de réaction nécessaire pour faire réagir le réactif de Grignard avec l'azide est de 30 minutes à 48 heures.